# EUROPEAN PATENT APPLICATION

(11) **EP 2 543 968 A2**
(43) Date of publication of application: **09.01.2013**
(21) Application number: 12173250.7
(22) Date of filing: 21.06.2012
(51) Int. Cl.: G01C 21/36, G01C 21/34, B60R 16/023

(54) **Navigation system, navigation method, and computer-readable storage medium**

(30) Priority: 05.07.2011 JP 2011148878; 05.08.2011 JP 2011171681; 05.08.2011 JP 2011171682; 28.09.2011 JP 2011213307; 02.11.2011 JP 2011241506
(62) Divisional of application: 12173025.3
(71) Applicant: AISIN AW CO., LTD., Anjo-shi, Aichi 444-1192 (JP)
(72) Inventor: Yamakawa, Junki, Anjo-shi, Aichi 444-1192 (JP); Mizuno, Hiroyuki, Anjo-shi, Aichi 444-1192 (JP)
(74) Representative: Kramer - Barske - Schmidtchen

(57) **Abstract**

Navigation system comprising an evaluation information acquisition unit that acquires evaluation information being an index for evaluating a driver's driving operation; an evaluation unit that evaluates the driving operation for each evaluation interval based on evaluation information; and a display control unit to display a past and a current evaluation result at a position corresponding to each evaluation interval in a mode that differs between the past and the current evaluation result, wherein, when the vehicle arrives at an end point of the evaluation interval of the past travel from the same traveling direction as a past traveling direction, the evaluation unit evaluates for a current evaluation interval, and the display control unit displays the current evaluation result on the current evaluation interval at a position which corresponds to the current evaluation interval and at which the past evaluation result is displayed.

## Description

### INCORPORATION BY REFERENCE

The disclosure of Japanese Patent Application No. 2011-171682 filed on August 5,2011 including the specification, drawings and abstract is incorporated herein by reference in its entirety.

### BACKGROUND OF THE INVENTION

### 1. Field of Invention

The present invention relates to a navigation system, a navigation method, and a computer-readable storage medium.

### 2. Description of the Related Art

Conventionally, a navigation system is used to guide a vehicle along a travel route. Today, there is an increasing need for fuel-saving driving from the viewpoint of fuel-cost saving and environmental protection. To satisfy this need, a navigation system is proposed that provides guidance with the aim of reducing the fuel cost of vehicle driving.

For example, to allow the user to specifically identify an interval in which the user should drive carefully for fuel economy improvement, a navigation device is proposed that highlights a link on the map to help the user identify the link if the host vehicle consumed more fuel for the link in the travel track than the standard fuel consumption amount. This navigation device calculates the standard fuel consumption amount calculated based on the fuel consumption amount of a past travel and highlights a link on the map if the host vehicle consumed more fuel for the link than the standard fuel consumption amount in the current travel (for example, see Japanese Patent Application Publication No. 2011-33447 (JP-A-2011-33447)).

### SUMMARY OF THE INVENTION

The conventional device such as the one described above displays the result of comparison between the fuel consumption amount of a past travel and the fuel consumption amount of the current travel. On the other hand, it is also possible to display on the screen the evaluation result indicating how the driver's driving operation is fuel efficient for each of the past travel and the current travel to allow the user to compare the evaluation results. In this case, the device may evaluate how the driver's driving operation is fuel efficient for each predetermined-distance evaluation interval, for which the vehicle traveled, and display the evaluation result at the positions, each corresponding to an evaluation interval on the map, in two different modes, one for the past travel and the other for the current travel. However, even if the vehicle travels in the same road in both the past travel and the current travel, the evaluation interval, for which driver's driving operation is evaluated, differs between the past travel and the current travel, sometimes with the possibility that the past evaluation result and the current evaluation result cannot be compared in the same evaluation interval.

The present invention provides a navigation system, a navigation method, and a computer-readable storage medium that allows the user to compare the past evaluation result and the current evaluation result in the same evaluation interval.

According to a first aspect of the present invention, there is provided a navigation system including: an evaluation information acquisition unit that acquires evaluation information that is an index for evaluating a driver's driving operation of a vehicle; an evaluation unit that evaluates the driver's driving operation for each evaluation interval having a predetermined distance, for which the vehicle traveled, based on evaluation information acquired by the evaluation information acquisition unit; and a display control unit that performs control to display a past evaluation result and a current evaluation result at a position, corresponding to each evaluation interval on a map displayed on a display unit, in a mode that differs between the past evaluation result and the current evaluation result, the past evaluation result being an evaluation result evaluated by the evaluation unit in a past travel, the current evaluation result being an evaluation result evaluated by the evaluation unit in a current travel, wherein, when the vehicle arrives at an end point of the evaluation interval of the past travel from the same traveling direction as a traveling direction at the past travel time during the current travel, the evaluation unit evaluates the driver's driving operation for a current evaluation interval, which has the predetermined distance to the end point, along a travel track of the current travel and the display control unit performs control to display the current evaluation result on the current evaluation interval at a position which corresponds to the current evaluation interval and at which the past evaluation result is displayed.

According to a second aspect of the present invention, there is provided a navigation method including: acquiring evaluation information that is an index for evaluating a driver's driving operation of a vehicle; evaluating the driver's driving operation for each evaluation interval having a predetermined distance, for which the vehicle traveled, based on the acquired evaluation information; and performing control to display a past evaluation result and a current evaluation result at a position, corresponding to each evaluation interval on a map displayed on a display unit, in a mode that differs between the past evaluation result and the current evaluation result, the past evaluation result being an evaluation result of the driver's driving operation in a past travel, the current evaluation result being an evaluation result of the driver's driving operation in a current travel, wherein, when the vehicle arrives at an end point of the evaluation interval of the past travel from the same traveling direction as a traveling direction at the past travel time during the current travel, the driver's driving operation is evaluated for a current evaluation interval, which has the predetermined distance to the end point, along a travel track of the current travel and the current evaluation result on the current evaluation interval is displayed at a position which corresponds to the current evaluation interval and at which the past evaluation result is displayed.

According to a third aspect of the present invention, there is provided a computer-readable storage medium that stores computer-executable instructions for performing the navigation method according to the second aspect of the present invention.

According to the configurations described above, if the vehicle arrives at the end point of an evaluation interval of a past travel from the same traveling direction as that at the past travel time during the current travel, the driver's driving operation is evaluated for the current evaluation interval, which has the predetermined distance to the end point, along the travel track of the current travel. And, the current evaluation result of the current evaluation interval is displayed at the position which corresponds to the current evaluation interval and at which the past evaluation result of the past travel is displayed. Therefore, it is possible to evaluate the current travel in the same evaluation interval as that of the past travel. This allows the user to easily compare the evaluation result of the past travel and the evaluation result of the current travel in the same evaluation interval.

### BRIEF DESCRIPTION OF THE DRAWINGS

The features, advantages, and technical and industrial significance of this invention will be described below with reference to the accompanying drawings, in which like numerals denote like elements, and wherein:
FIG. 1 is a block diagram showing an example of a navigation system in an embodiment;
FIG. 2 is a table showing an example of information stored in an evaluation result DB;
FIG. 3 is a flowchart showing the navigation processing; and
FIG. 4 is a top view showing an example of the relation between the travel route and the evaluation interval of a vehicle.

### DETAILED DESCRIPTION OF THE EMBODIMENTS

An embodiment of a navigation system, a navigation method, and a navigation program (computer-readable storage medium) of the present invention will be described in detail below with reference to the drawings. It should be noted that the present invention is not limited by this embodiment.

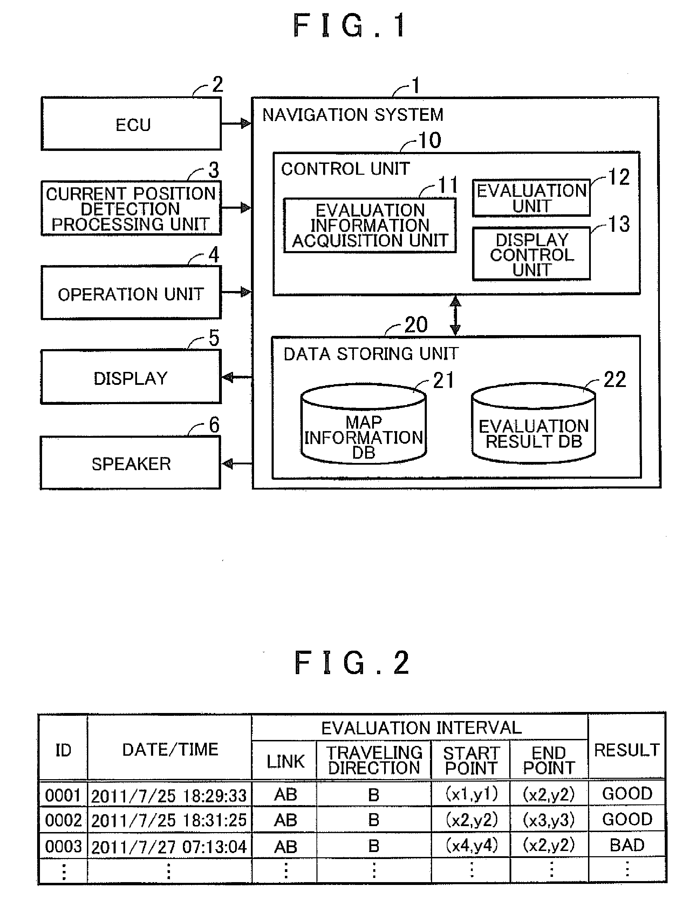

First, the following describes the configuration of the navigation system. FIG. 1 is a block diagram showing an example of the navigation system in this embodiment. A navigation system 1 is installed, for example, on a vehicle. As shown in FIG. 1, the navigation system 1 is connected to an Electronic Control Unit (ECU) 2, a current position detection processing unit 3, an operation unit 4, a display 5, and a speaker 6.

The ECU 2 monitors the status of the units of the vehicle via various types of sensors to control the units of the vehicle including the power system, such as the engine and motor generator, the transmission, the drive system, and the control system (all not shown) of the vehicle. For example, the ECU 2 controls the transmission by acquiring the vehicle-speed pulse signal, which is proportional to the number of rotations of the axle, from the vehicle speed sensor and controls the fuel injection system (not shown) based on the oxygen concentration in exhaust gas acquired from the 02 sensor. Various types of information, such as the vehicle-speed pulse signal and the fuel injection consumption, are input from the ECU 2 to the navigation system 1.

The current position detection processing unit 3 detects the current vehicle position. More specifically, the current position detection processing unit 3 has at least one of the GPS, geomagnetic sensor, distance sensor, and gyro sensor (all not shown) to detect the current vehicle position (coordinates) and direction using a known method.

The operation unit 4 accepts user's operation input. Any arbitrary configuration may be used as the actual configuration of the operation unit 4. For example, the operation unit 4 may be configured using a touch panel provided in front of the display 5, pushbuttons, a remote operation unit such as a remote control, or a voice recognition unit such as a microphone that accepts voice.

The display 5 displays various types of information under control of the navigation system 1. Any arbitrary configuration may be used as the actual configuration of the display 5. For example, a flat panel display, such as a known liquid crystal display or organic electro-luminescence display, may be used.

The speaker 6 outputs various types of voice under control of the navigation system 1. Any arbitrary mode of voice may be used as the actual voice output from the speaker 6. Synthetic voice or pre-recorded voice may be the output as necessary.

The navigation system 1 includes a control unit 10 and a data storing unit 20.

The control unit 10 controls the navigation system 1. More specifically, the control unit 10 is a computer configured by a CPU, various programs interpreted by and executed on the CPU (including the basic control programs such as the OS and the application programs that are started by the OS for implementing specific functions), and an internal memory such as a RAM for storing programs and various data. The navigation program in this embodiment is installed into the navigation system 1 via a storage medium or a network to substantially configure the units of the control unit 10.

The control unit 10 includes the following three conceptually functional units: evaluation information acquisition unit 11, evaluation unit 12, and display control unit 13. The evaluation information acquisition unit 11 acquires evaluation information that is an index for evaluating the vehicle driver's driving operation. The evaluation unit 12 evaluates the driver's driving operation in each evaluation interval having a predetermined distance for which the vehicle travels (for example, 100m). The display control unit 13 controls the display 5 so that the evaluation result of the evaluation unit 12 is displayed at a position corresponding to each evaluation interval on the map displayed on the display 5. The processing performed by the units of the control unit 10 will be described later more in detail.

The data storing unit 20 stores therein the programs and various data required for the operation of the navigation system 1. For example, the data storing unit 20 is configured by a magnetic storage medium such as a hard disk (not shown) that is one of external storage devices. Other storage media, including a semiconductor storage medium, such as a flash memory, or an optical storage medium, such as a DVD or a blue-ray disc, may also be used as the data storing unit 20 in place of, or in conjunction with, a hard disk.

The data storing unit 20 includes a map information database 21 (hereinafter a database is abbreviated DB) and an evaluation result DB 22.

The map information DB 21 stores map information. For example, the map information includes the following: link data (link number, connection node number, road coordinates, road type, number of lanes, driving regulation, etc.), node data (node number, coordinates), object data (traffic signal, road sign, guard rail, building, etc.), facility data (facility location, facility type, etc.), geographical feature data, and map display data for displaying a map on the display 5.

The evaluation result DB 22 associates evaluation interval information with evaluation result information to each other and stores the associated information therein. The evaluation interval information identifies an evaluation interval, and the evaluation result information identifies the evaluation result of the evaluation interval. FIG. 2 is a table showing an example of the information stored in the evaluation result DB 22. As shown in FIG. 2, the information corresponding to the items "ID", "date/time", "evaluation interval", and "result", which are associated to each other, is stored in the evaluation result DB 22. The item "ID" stores the identification information identifying the evaluation result ("0001", etc., in FIG. 2). The item "date/time" stores the information identifying the date/time at which the driver's driving operation of the vehicle is evaluated in each evaluation interval (in FIG. 2, "2011/7/25 18:29:33" is stored to indicate the date/time twenty-nine minutes and thirty-three seconds past six p.m. on July, 25, 2011). The item "evaluation interval" stores the evaluation interval information identifying an evaluation interval. The sub-items "link", "traveling direction", "start point", and "end point" are associated to each other and stored as the evaluation interval information. The sub-item "link" stores the information identifying a link that includes the end point of the evaluation interval. For example, a link number is stored ("AB" in FIG. 2). The link number is a number generated by combining the node numbers of the nodes at both ends of the link. The sub-item "traveling direction" stores the information identifying the traveling direction of the vehicle when the vehicle arrives at the end point of each evaluation interval. For example, this sub-item stores the node number of a node that is one of the nodes at both ends of the link including the end point of the evaluation interval and is ahead of the traveling direction of the vehicle ("B" in FIG. 2). The sub-items "start point" and "end point" store the information identifying the start point and the end point of the evaluation interval. For example, the position coordinates of the start point and the end point of the evaluation interval are stored ((x1, y1), etc., in FIG. 2). The item "result" stores the evaluation result information identifying the evaluation result. In FIG. 2, one of the following two is stored as the evaluation result information: one is "good" indicating that the driver's driving operation is fuel efficient and the other is "bad" indicating that the driver's driving operation is not fuel efficient. The time at which the information is stored in the evaluation result DB 22 will be described later.

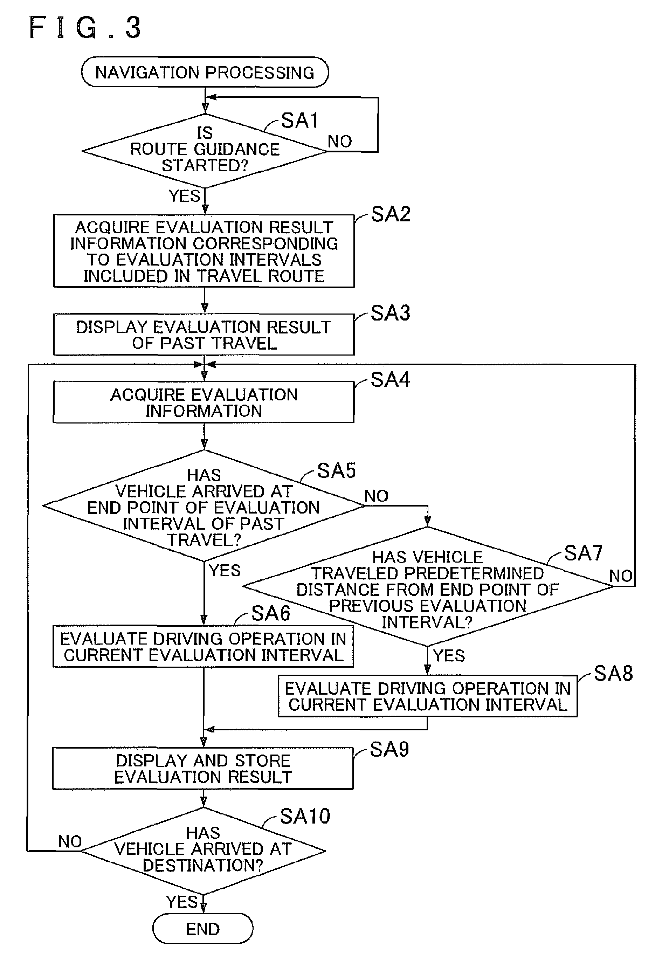

Next, the following describes the navigation processing that is executed by the navigation system 1 configured as described above. FIG. 3 is a flowchart showing the navigation processing (in the description of the processing below, "step" is abbreviated S). The navigation processing is started, for example, when the user turns on the navigation system 1 and performs the operation via the operation unit 4 to set the vehicle's travel destination. In this case, the user sets the destination, for example, by performing one of the following operations: the user performs the operation via operation unit 4 to set the final destination, the user re-arranges two or more already-set destinations via the operation unit 4 and sets a destination different from the current destination as the final destination, and the user erases the already-set final destination and sets another destination as the final destination.

Immediately after the navigation processing is started, the display control unit 13 waits until route guidance from the starting point (for example, the current position detected by the current position detection processing unit 3) to the destination is started (No in SA1). A route search method and a route guidance method, which are known, may be used for an actual route search from the starting point to the destination and for the route guidance based on the search result. The detailed description of those methods is omitted here.

When route guidance from the starting point to the destination is started (Yes in SA1), the display control unit 13 acquires the evaluation result information, corresponding to the evaluation intervals included in the current travel route of the vehicle, from the evaluation result DB 22 (SA2). For example, the display control unit 13 acquires the evaluation result information, associated both with the link number of a link, which constitutes the current travel route, and with the traveling direction of the vehicle in the current travel route, from the evaluation result information stored in the evaluation result DB 22. In this case, if the evaluation result DB 22 stores two or more evaluation result information pieces, which correspond to two or more evaluation intervals having the same end point, as the evaluation result information corresponding both to the link number of a link, which constitutes the current travel route, and to the traveling direction of the vehicle in the current travel route, that is, if the evaluation result DB 22 stores two or more evaluation result information pieces that include, in their sub-items "end point", the same position coordinates of the end point of the evaluation interval, the display control unit 13 acquires one of the evaluation result information pieces that includes, in the sub-item "start point", the position coordinates of the start point of the evaluation interval indicating a position on the current travel route of the vehicle (that is, evaluation interval information corresponding to the evaluation interval included in the current travel route of the vehicle).

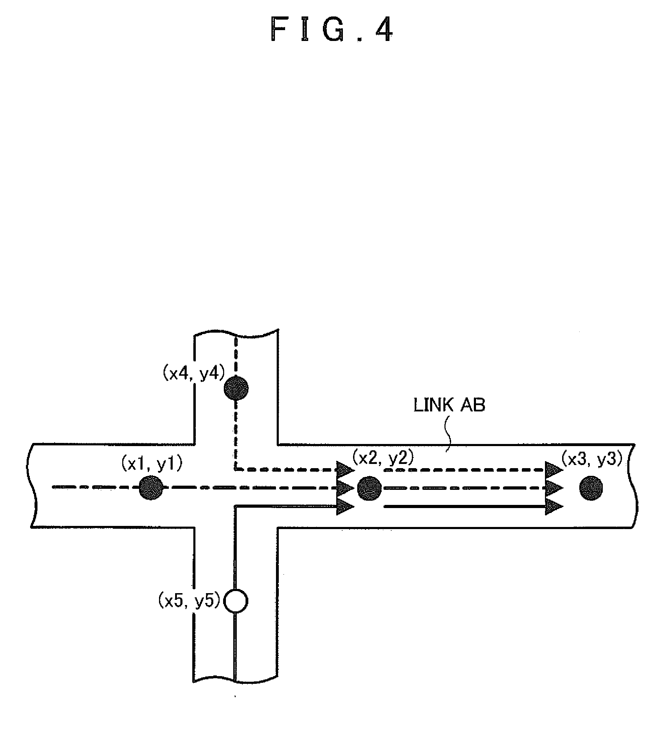

FIG. 4 is a top view showing an example of the relation between the travel route of a vehicle and an evaluation interval. In FIG. 4, a black spot represents a point that is the start point and/or end point of an evaluation interval of a past travel. When the current travel route of the vehicle is represented by the dashed arrow in FIG. 4, the evaluation result DB 22 in FIG. 2 stores the evaluation result information, corresponding to IDs "0001", "0002", and "0003", as first evaluation result information that corresponds to the link number "AB" of a link constituting the current travel route and that corresponds to the traveling direction "B" of the vehicle in the current travel route (in the right direction in FIG. 4). Note that the evaluation result information corresponding to the IDs "0001" and "0003" includes the same position coordinates (x2, y2) of the end point of the evaluation interval. Of the two evaluation result information pieces corresponding to the IDs "0001" and "0003", the position coordinates (x1, y1) of the start point of the evaluation interval corresponding to the ID "0001" are on the current travel route of the vehicle. Therefore, the display control unit 13 acquires the evaluation result information corresponding to the ID "0001". That is, the display control unit 13 acquires the evaluation result information, corresponding to the IDs "0001" and "0002", from the evaluation result DB 22 as the evaluation result information corresponding to the evaluation interval included in the travel route represented by the dashed arrow in FIG. 4.

When the current travel route of the vehicle is represented by the dotted arrow in FIG. 4, the evaluation result DB 22 in FIG. 2 stores the evaluation result information, corresponding to IDs "0001", "0002", and "0003", as evaluation result information that corresponds to the link number "AB" of a link constituting the current travel route and that corresponds to the traveling direction of the vehicle in the current travel route (in the right direction in FIG. 4). Note that the evaluation result information corresponding to the IDs "0001" and "0003" includes the same position coordinates (x2, y2) of the end point of the evaluation interval. Of the two evaluation result information pieces corresponding to the IDs "0001" and "0003", the position coordinates (x4, y4) of the start point of the evaluation interval corresponding to the ID "0003" are on the current travel route of the vehicle. Therefore, the display control unit 13 acquires the evaluation result information corresponding to the ID "0003". That is, the display control unit 13 acquires the evaluation result information, corresponding to the IDs "0002" and "0003", from the evaluation result DB 22 as the evaluation result information corresponding to the evaluation interval included in the travel route represented by the dotted arrow in FIG. 4.

When the current travel route of the vehicle is represented by the solid arrow in FIG. 4, the evaluation result DB 22 in FIG. 2 stores the evaluation result information, corresponding to IDs "0001", "0002", and "0003", as evaluation result information that corresponds to the link number "AB" of a link constituting the current travel route and that corresponds to the traveling direction of the vehicle in the current travel route (in the right direction in FIG. 4). Note that the evaluation result information corresponding to the IDs "0001" and "0003" includes the same position coordinates (x2, y2) of the end point of the evaluation interval. However, the position coordinates (x1, y1) and (x4, y4) of the start points of the evaluation intervals corresponding to the IDs "0001" and "0003" are not on the current travel route of the vehicle. In this case, the display control unit 13 acquires later evaluation result information (evaluation result information corresponding to the ID "0003" in the example in FIG. 2). That is, the display control unit 13 acquires the evaluation result information, corresponding to the IDs "0002" and "0003", from the evaluation result DB 22 as the evaluation result information corresponding to the evaluation interval included in the travel route represented by the solid arrow in FIG. 4.

Returning to FIG. 3, the display control unit 13 performs control processing after the processing in SA2 so that the evaluation result corresponding to the evaluation result information, acquired in SA2, is displayed at the position corresponding to each evaluation interval on the map, displayed on the display 5, as the evaluation result of the past travel (past evaluation result) (SA3). The position corresponding to each evaluation interval may be the position of the end point of an evaluation interval, the position of the start point of an evaluation interval, or the position of a way point between the start point and the end point of an evaluation interval. The evaluation interval may be displayed in any display mode. For example, the display control unit 13 displays a semitransparent marker, which indicates a past evaluation result, at the position corresponding to the evaluation interval on the map. The display control unit 13 displays a green marker if the evaluation result is "good", and a brown marker if the evaluation result is "bad".

Next, the evaluation information acquisition unit 11 acquires evaluation information that is used as an index for evaluating the driver's driving operation of the vehicle (SA4). For example, if the eco lamp, which indicates whether or not the driver's driving operation is fuel efficient, is displayed on the meter panel (not shown) of the vehicle, the evaluation information acquisition unit 11 acquires the eco lamp information, which identifies the eco lamp on/off status, from the ECU 2 as the evaluation information and stores the acquired eco lamp information in a storage unit (not shown) such as a RAM.

Next, the evaluation unit 12 determines whether or not the vehicle has arrived at the end point of an evaluation interval of the past travel from the same driving direction as that at the past travel time during the current travel (SA5). That is, based on the current position detected by the current position detection processing unit 3, the evaluation unit 12 determines whether or not the vehicle has arrived at the end point of the evaluation interval, corresponding to the evaluation result information acquired in SA2, from the driving direction corresponding to the evaluation result information.

If it is determined, as the result of the determination, that the vehicle has arrived at the end point of the evaluation interval of the past travel from the same driving direction as that at the past travel time during the current travel (Yes in SA5), the evaluation unit 12 evaluates the driver's driving operation for the current evaluation interval (SA6). The current evaluation interval refers to a predetermined-distance interval along the current travel track. Note that the end of the current evaluation interval is located at the same position where the end point of the evaluation interval of the past travel is located. More specifically, with the end point of the evaluation interval of the past travel, at which the vehicle arrived in SA5, as the end point of the current evaluation interval, the evaluation unit 12 determines the point, which is located the predetermined distance from the end point along the travel track of the current travel in the direction opposite to the traveling direction, as the start point of the current evaluation interval. Determining the start point and the end point in this way allows an interval, similar to the evaluation interval of the past travel, to be used as the current evaluation interval. For example, based on the evaluation information acquired by the evaluation information acquisition unit 11 in the current evaluation interval that is set as described above, the evaluation unit 12 calculates the total distance for which the vehicle traveled with the eco lamp turned on in the current evaluation interval (eco-lamp-on travel distance). If the value generated by dividing the eco-lamp-on travel distance by the distance of the current evaluation interval (that is, the ratio of the vehicle travel distance, for which the driver's driving operation is fuel efficient, to the distance of the current evaluation interval) is equal to or larger than a predetermined evaluation criterion (for example, 90%), the evaluation unit 12 evaluates that the driver's driving operation in the current evaluation interval is fuel efficient. On the other hand, if the value is smaller than the predetermined evaluation criterion, the evaluation unit 12 evaluates that the driver's driving operation in the current evaluation interval is not fuel efficient.

For example, in FIG. 4, if the current travel route of the vehicle is the route represented by the dashed arrow and if the vehicle has arrived at the end point (x2, y2) of an evaluation interval of a past travel from the same direction as that at the past travel time (in the right direction in FIG. 4) (Yes in SA5), the evaluation unit 12 determines the end point (x2, y2) of the evaluation interval of the past travel, at which the vehicle arrived, as the end point of the current evaluation interval. In this case, the evaluation unit 12 determines the point (x1, y1), which is located the predetermined distance from the end point along the travel track of the current travel in the direction opposite to the traveling direction, as the start point of the current evaluation interval. Based on the evaluation information acquired by the evaluation information acquisition unit 11 in the current evaluation interval that is set described above, the evaluation unit 12 evaluates the driver's driving operation in the current evaluation interval (SA6).

In FIG. 4, if the current travel route of the vehicle is the route represented by the dotted arrow and if the vehicle has arrived at the end point (x2, y2) of an evaluation interval of a past travel from the same direction as that at the past travel time (in the right direction in FIG. 4) (Yes in SA5), the evaluation unit 12 determines the end point (x2, y2) of the evaluation interval of the past travel, at which the vehicle arrived, as the end point of the current evaluation interval. In this case, the evaluation unit 12 determines the point (x4, y4), which is located the predetermined distance from the end point along the travel track of the current travel in the direction opposite to the traveling direction, as the start point of the current evaluation interval. Based on the evaluation information acquired by the evaluation information acquisition unit 11 in the current evaluation interval that is set described above, the evaluation unit 12 evaluates the driver's driving operation in the current evaluation interval (SA6).

In FIG. 4, if the current travel route of the vehicle is the route represented by the solid arrow and if the vehicle has arrived at the end point (x2, y2) of an evaluation interval of a past travel from the same direction as that at the past travel time (in the right direction in FIG. 4) (Yes in SA5), the evaluation unit 12 determines the end point (x2, y2) of the evaluation interval of the past travel, at which the vehicle arrived, as the end point of the current evaluation interval. In this case, the evaluation unit 12 determines the point (x5, y5), which is located the predetermined distance from the end point along the travel track of the current travel in the direction opposite to the traveling direction, as the start point of the current evaluation interval. Based on the evaluation information acquired by the evaluation information acquisition unit 11 in the current evaluation interval that is set described above, the evaluation unit 12 evaluates the driver's driving operation in the current evaluation interval (SA6).

Returning to FIG. 3, if it is determined as the result of the determination in SA5 that, in the current travel, the vehicle does not arrive at the end point of an evaluation interval of a past travel from the same driving direction as that at the past travel time (No in SA5), the evaluation unit 12 determines whether or not the vehicle traveled the predetermined distance from the end point of the evaluation interval, for which the driver's driving operation was evaluated last in the current travel (hereinafter called "previous evaluation interval" as necessary), based on the current position detected by the current position detection processing unit 3 (SA7).

If it is determined as the result of the determination that the vehicle has not traveled the predetermined distance from the end of the previous evaluation interval (No in SA7), control is passed back to SA4. Thereafter, the processing of SA4, SA5, and SA7 is repeated until the vehicle arrives the end point of the evaluation interval of the past travel from the same traveling direction as that at the past travel time (Yes in SA5) or until the vehicle has traveled the predetermined distance from the end point of the previous evaluation interval (Yes in SA7).

On the other hand, if the vehicle has traveled the predetermined distance from the end point of the previous evaluation interval (Yes in SA7), the evaluation unit 12 evaluates the driver's driving operation for the current evaluation interval having the predetermined distance for which the vehicle traveled (SA8). More specifically, with the end point of the previous evaluation interval as the start point of the current evaluation interval, the evaluation unit 12 determines the point, which is located the predetermined distance from the endpoint of the previous evaluation interval along the travel track of the current travel, as the end point of the current evaluation interval. For example, based on the evaluation information acquired by the evaluation information acquisition unit 11 in the current evaluation interval that is set as described above, the evaluation unit 12 calculates the total distance for which the vehicle traveled with the eco lamp turned on in the current evaluation interval (eco-lamp-on travel distance). If the value generated by dividing the eco-lamp-on travel distance by the distance of the current evaluation interval (that is, the ratio of the vehicle travel distance, for which the driver's driving operation is fuel efficient, to the distance of the current evaluation interval) is equal to or larger than a predetermined evaluation criterion, the evaluation unit 12 evaluates that the driver's driving operation in the current evaluation interval is fuel efficient. On the other hand, if the value is smaller than the predetermined evaluation criterion, the evaluation unit 12 evaluates that the driver's driving operation in the current evaluation interval is not fuel efficient.

After the processing of SA6 or SA8, the display control unit 13 performs control processing to display the evaluation result of the current evaluation interval (current evaluation result) evaluated in SA6 or SA8 at the position corresponding to the current evaluation interval in a mode different from the mode in which the past evaluation result is displayed. In addition, the evaluation unit 12 stores the evaluation result information, which identifies the current evaluation result evaluated in SA6 or SA8, and the evaluation interval information, which identifies the current evaluation interval (for example, link in which the end point of the current evaluation interval is included, traveling direction when the vehicle has arrived at the end point of the current evaluation interval, and information identifying the start point and the end point of the current evaluation interval), in the evaluation result DB 22 (SA9).

If the vehicle arrives at the end point of an evaluation interval of a past travel from the same traveling direction as that at the past travel time during the current travel (Yes in SA5) and if the driver's driving operation is evaluated for the current evaluation interval, which has the predetermined distance to the end point of the evaluation interval of the past travel, along the travel track of the current travel (SA6), the display control unit 13 performs control processing to superimpose the current evaluation result, obtained in SA6, on the past evaluation result. That is, the display control unit 13 displays the current evaluation result at the position which corresponds to the current evaluation interval on the map displayed on the display 5 and at which the evaluation result of the past travel is displayed. Because the current evaluation interval is set to the same evaluation interval as that of the past travel in SA6, the position corresponding to the current evaluation interval on the map displayed on the display 5 is the same position at which the past evaluation result is displayed. This display method therefore superimposes the current evaluation result sequentially on the past evaluation result each time the vehicle travels the predetermined-distance evaluation interval in the current travel, thus allowing the user to easily compare the past evaluation result and the current evaluation result in the same evaluation interval. The display control unit 13 displays a non-transparent marker, which indicates the current evaluation result, at the position corresponding to the evaluation interval on the map to allow the user to distinguish between the current evaluation result and the past evaluation result.

After the processing in SA9, the evaluation information acquisition unit 11 determines whether or not the vehicle has arrived at the destination based on the vehicle's current position detected by the current position detection processing unit 3 (SA10). If it is determined as the result of the determination that the vehicle has not yet arrived at the destination (No in SA10), control is passed back to SA4. Thereafter, the processing of SA4 to SA10 is repeated until the vehicle arrives at the destination. This repeated processing causes the current evaluation results of the evaluation intervals of the current travel to be displayed sequentially on the positions at which the past evaluation results are displayed.

On the other hand, when the vehicle arrives at the destination (Yes in SA10), the control unit 10 terminates the navigation processing.

According to this embodiment, if the vehicle arrives at the end point of an evaluation interval of a past travel from the same traveling direction as that at the past travel time during the current travel, the evaluation unit 12 evaluates the driver's driving operation for the current evaluation interval, which has the predetermined distance to the end point, along the travel track of the current travel. And, the display control unit 13 performs control processing to display the current evaluation result of the current evaluation interval at the position which corresponds to the current evaluation interval and at which the past evaluation result of the past travel is displayed. Therefore, it is possible to evaluate the current travel in the same evaluation interval as that of the past travel. This allows the user to easily compare the evaluation result of the past travel and the evaluation result of the current travel in the same evaluation interval.

The evaluation result DB 22 stores the evaluation interval information, which identifies an evaluation interval, and the evaluation result information, which identifies the evaluation result of the evaluation interval, with the evaluation interval information and the evaluation result information associated with each other. When the evaluation interval information and the evaluation result information, corresponding to two or more evaluation intervals with the same end point, are stored in the evaluation result DB 22, the display control unit 13 acquires the evaluation result information, corresponding to the evaluation interval included in the current travel route of a vehicle, from the evaluation result DB 22. And, the display control unit 13 performs control processing so that the evaluation result, corresponding to the acquired evaluation result information, is displayed at the position corresponding to the evaluation interval as the evaluation result of the past travel. Therefore, it is possible to evaluate the current travel in the same evaluation interval as that of the past travel. This allows the user to easily compare the evaluation result of the past travel and the evaluation result of the current travel in the same evaluation interval.

While the embodiment of the present invention has been described, the actual configuration and the units of the present invention may be altered or improved in the scope of the technological concept of the inventions described in the claims. The following describes modifications.

It should be noted that the problems to be solved by the present invention and the effect of the present invention are not limited by the contents described above but may be varied according to the implementation environment of the present invention or the details of the configuration. Therefore, the present invention may solve only a part of the objects described above or archive only a part of the effects described above.

The electrical components described above, conceptually functional components, need not always be configured physically as shown in the figures. That is, the actual mode of the distribution and integration of the components is not limited to the mode shown in the figure. Instead, the components may be functionally or physically distributed or integrated, in part or in whole, in any units according to the various types of load and the usage status. For example, the navigation system 1 may be mounted on a vehicle as one integrated device. The navigation system 1 may also be provided, in part or in whole (for example, the evaluation unit 12 of the control unit 10, or evaluation information DB 22 of the data storing unit 20), in a center device connected to a vehicle over a network in such a way that they can communicate with each other.

In the embodiment described above, an example is described in which the evaluation information acquisition unit 11 acquires eco-lamp information, which identifies the eco-lamp on/off status, from the ECU 2. Instead of this method, the evaluation information acquisition unit 11 may also acquire the information, which identifies the accelerator operation amount, brake pedal force, power source usage status, etc., directly from the ECU 2 and, based on the acquired information, serially determines whether or not the driver's driving operation is fuel efficient.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A navigation system comprising:
an evaluation information acquisition unit (11) that is adapted to acquire evaluation information that is an index for evaluating a driver's driving operation of a vehicle;
an evaluation unit (12) that is adapted to evaluate the driver's driving operation for each evaluation interval having a predetermined distance, for which the vehicle traveled, based on evaluation information acquired by the evaluation information acquisition unit (11); and
a display control unit (13) that is adapted to perform control to display a past evaluation result and a current evaluation result at a position, corresponding to each evaluation interval on a map displayed on a display unit (5), in a mode that differs between the past evaluation result and the current evaluation result, the past evaluation result being an evaluation result evaluated by the evaluation unit (12) in a past travel, the current evaluation result being an evaluation result evaluated by the evaluation unit (12) in a current travel,
wherein, when the vehicle arrives at an end point of the evaluation interval of the past travel from the same traveling direction as a traveling direction at the past travel time during the current travel,
the evaluation unit (12) evaluates the driver's driving operation for a current evaluation interval, which has the predetermined distance to the end point, along a travel track of the current travel and
the display control unit (13) performs control to display the current evaluation result on the current evaluation interval at a position which corresponds to the current evaluation interval and at which the past evaluation result is displayed.

2. The navigation system according to claim 1 wherein the display control unit (13) performs control to superimpose the current evaluation result on the past evaluation result.

3. The navigation system according to claim 1 or 2, further comprising:
an evaluation result information storage unit (22) that is adapted to store evaluation interval information and evaluation result information in association with each other, the evaluation interval information identifying the evaluation interval, the evaluation result information identifying the evaluation result in the evaluation interval,
wherein, when the evaluation interval information and the evaluation result information corresponding to a plurality of the evaluation intervals, which have the same end point, are stored in the evaluation result information storage unit (22), the display control unit acquires the evaluation result information, corresponding to the evaluation interval included in a current travel route of the vehicle, from the evaluation result information storage unit (22) and performs control to display an evaluation result, corresponding to the acquired evaluation result information, at a position, corresponding to the evaluation interval, as the past evaluation result.

4. A navigation method comprising:
acquiring (SA4) evaluation information that is an index for evaluating a driver's driving operation of a vehicle;
evaluating (SA6, SA8) the driver's driving operation for each evaluation interval having a predetermined distance, for which the vehicle traveled, based on the acquired evaluation information; and
performing control (SA9) to display a past evaluation result and a current evaluation result at a position, corresponding to each evaluation interval on a map displayed on a display unit, in a mode that differs between the past evaluation result and the current evaluation result, the past evaluation result being an evaluation result of the driver's driving operation in a past travel, the current evaluation result being an evaluation result of the driver's driving operation in a current travel,
wherein, when the vehicle arrives at an end point of the evaluation interval of the past travel from the same traveling direction as a traveling direction at the past travel time during the current travel,
the driver's driving operation is evaluated for a current evaluation interval, which has the predetermined distance to the end point, along a travel track of the current travel and
the current evaluation result on the current evaluation interval is displayed at a position which corresponds to the current evaluation interval and at which the past evaluation result is displayed.

5. A computer-readable storage medium that stores computer-executable instructions for performing the navigation method according to claim 4.
